# EUROPEAN PATENT APPLICATION

(11) **EP 4 336 796 A1**
(43) Date of publication of application: **13.03.2024**
(21) Application number: 21967616.0
(22) Date of filing: 15.12.2021
(51) Int. Cl.: H04L 47/2441

(54) **DETERMINISTIC TRAFFIC TRANSMISSION METHOD AND APPARATUS**

(71) Applicant: New H3C Technologies Co., Ltd., Hangzhou, Zhejiang 310052 (CN)
(72) Inventor: GUO, Daorong, Beijing 100102 (CN)
(74) Representative: Grünecker Patent- und Rechtsanwälte PartG mbB
(86) International application number: PCT/CN2021/138338
(87) International publication number: WO 2023/108479

(57) **Abstract**

The present application provides a method and an apparatus for transmitting DetNet flow. Through the embodiments of the present application, the embodiment can realize providing DetNet flow forwarding on the basis of the existing best-effort flow forwarding. Further, through the above distribution thread, DFT, and CFT in a network device, it can be ensured that the DetNet flow forwarding is not affected by best-effort flow forwarding, and the mutual compatibility of existing best-effort flow forwarding and DetNet flow forwarding can be guaranteed.

## Description

### TECHNICAL FIELD

The present application relates to the field of network communication technology, and in particular, to a method and an apparatus for transmitting DetNet (Deterministic Networking) flow.

### BACKGROUND

Deterministic networking (DetNet) can provide a capability to carry specified data flows for real-time applications with extremely low data loss rates and bounded latency within a network domain. Taking a DetNet-based on local area network, i.e., Time-Sensitive Networking (TSN), as an example, in TSN, transmission delay on the entire forwarding path at the forwarding layer is ensured by Cyclic Queuing and Forwarding (CQF) and the like.

For ease of description, service flow with DetNet service demands such as delay, packet loss rate, etc. transmitted in a DetNet is referred to as DetNet flow. For other service flow different from DetNet flow, other service flow different from DetNet flow can be forwarded according to a best-effort forwarding method in combination with existing forwarding devices such as software forwarding devices or hardware forwarding devices based on switching chips or NPs, and can be referred to as best-effort flow.

### SUMMARY

The present disclosure provides a method and an apparatus for transmitting DetNet flow, in order to realize transmitting DetNet flow of specific cyclic queuing and forwarding based on Segment Routing SR.

Embodiments of the present disclosure provided a method for transmitting DetNet flow DT, the method being applied to a network device, and the method includes:
distributing, by a woken-up distribution thread on the device, packets in a packet receiving queue bound to the distribution thread, so as to distribute packets belonging to DetNet flow in the packet receiving queue to a corresponding DetNet-flow Buffering Queue DBQ, and distribute packets belonging to best-effort flow to a corresponding Best-Effort flow queue BTQ; where the packets in the packet receiving queue refer to packets received through a local interface of the network device from outside;
putting, by a woken-up DetNet Forwarding Thread DFT on the device, packets in a DBQ bound to the DFT into a corresponding DetNet flow Queue DTQ;
putting, by a woken-up Cycle Forwarding Thread CFT on the device, packets in a DTQ bound to the CFT into a corresponding Cyclic Specific Queue CSQ, and selecting, by the CFT, a packet from a Sending Queue SQ and forwarding the packet through an out interface used for forwarding packets, where the SQ is a CSQ currently pointed by a Sending Queue Pointer SQP corresponding to the CFT.

Embodiments of the present disclosure provided an electronic device, including: a processor and a machine-readable storage medium;
wherein the machine-readable storage medium stores machine-executable instructions executable by the processor;
the processor is adapted to execute machine-executable instructions to implement the steps of the above method.

It can be seen from the above technical solution that the embodiment realizes providing DetNet flow forwarding on the basis of the existing best-effort flow forwarding.

Further, through the above distribution thread, DFT, and CFT, it can be ensured that the DetNet flow forwarding is not affected by best-effort flow forwarding, and the mutual compatibility of existing best-effort flow forwarding and DetNet flow forwarding can be guaranteed.

### BRIEF DESCRIPTION OF THE DRAWINGS

The accompanying drawings, which are incorporated in and constitute a part of this specification, illustrate embodiments consistent with the present disclosure, and together with the description, serve to explain the principles of the present disclosure.
FIG. 1 is a schematic diagram illustrating a best-effort forwarding structure;
FIG. 2 is a flowchart illustrating a method provided by an embodiment of the present application;
FIG. 3 is a schematic structural diagram illustrating DetNet flow forwarding and best-effort flow forwarding provided by an embodiment of the present application;
FIG. 4 is a flowchart illustrating an implementation of distribution thread provided by an embodiment of the present application;
FIG. 5 is a flowchart illustrating an implementation of DFT provided by an embodiment of the present application;
FIG. 6 is a schematic diagram illustrating association of a fast forwarding table, OutIfInfo and SRLists provided by an embodiment of the present application;
FIG. 7 is a flowchart illustrating an implementation of CFT provided by an embodiment of the present application;
FIG. 8 is a schematic diagram illustrating a relationship between CSQP and CSQ provided by an embodiment of the present application;
FIG. 9 is a schematic structural diagram illustrating a relationship among SQ, RQ, and TQ provided by an embodiment of the present application;
FIG. 10 is a schematic diagram illustrating interaction between threads provided by an embodiment of the present application;
FIG. 11 is a structural diagram illustrating an apparatus provided by an embodiment of the present application;
FIG. 12 is a structural diagram of an electronic device provided by an embodiment of the present application.

### DETAILED DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise presented. The embodiments set forth in the following description of exemplary embodiments do not represent all embodiments consistent with the present application. Instead, they are merely examples of apparatuses and methods consistent with aspects related to the present application as recited in the appended claims.

The terminology used in the present application is for the purpose of describing exemplary embodiments only and is not intended to limit the present application. As used in the present application and the appended claims, the singular forms "a," "an" and "the" are intended to include the plural forms as well, unless the context clearly indicates otherwise.

In order to enable those skilled in the art to better understand the technical solutions provided by the embodiments of the present application, and to make the above-mentioned objectives, features and advantages of the embodiments of the present application more apparent, a forwarding process designed based on best-effort forwarding will be first described below.

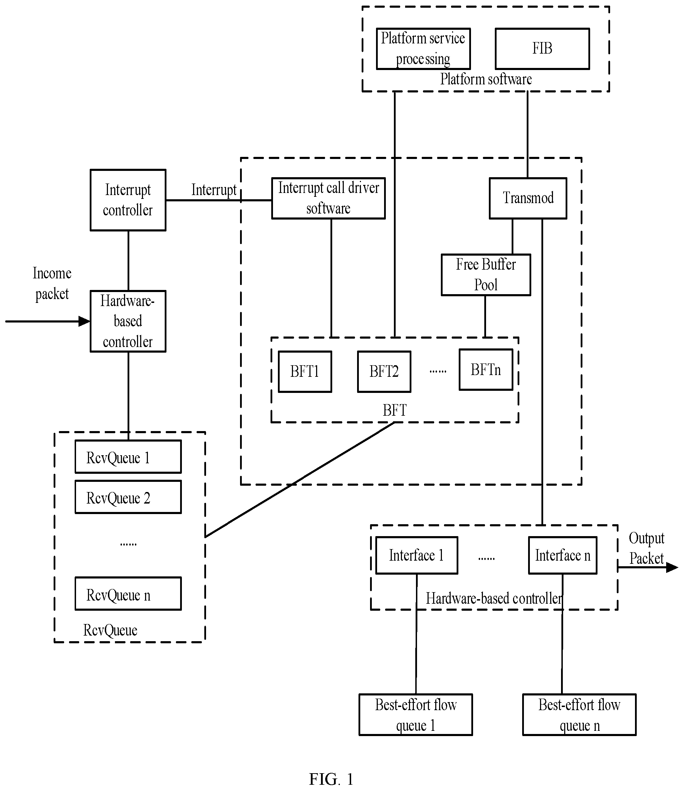

For a software based forwarding device (such as a low-end router), packets are usually forwarded according to the best-effort forwarding method shown in FIG. 1.

As shown in FIG. 1, upon receiving a packet, a hardware-based controller (such as a controller on an interface board) will first store the packet in a corresponding packet receiving queue (RcvQueue) in a memory according to a characteristic parameter of the packet. Optionally, taking the packet characteristic parameter being a packet quintuple as an example, a Hash operation can be performed on the packet quintuple to obtain an operation result, packet receiving queues in the memory can be searched for a packet receiving queue with a sequence number of a queue being the operation result, and the packet is stored in the found packet receiving queue. It should be noted that, here is only an example to describe how to store the packet in the corresponding packet receiving queue in the memory according to the packet characteristic parameter of the packet, and is not intended to be limiting.

In one example, upon receiving a packet, the hardware-based controller will also trigger an interrupt controller to generate an interrupt, so as to wake up at least one Best-effort Forwarding Thread (BFT) through an interrupt handler in interrupt call driver software which is generated by the interrupt controller (such as CPU).

The woken-up BFT fetches the packet from the bound packet receiving queue, converts the fetched packet into a packet of a specified form and sends it to the platform software (also known as a platform interface).

The platform software queries a FIB table to determine an out interface for forwarding the packet, and calls a transmitting interface (Transmod) of driver software to send the packet to a hardware queue corresponding to the out interface for transmission. Optionally, in the embodiment, a hardware queue set with a high priority has packets therein to be transmitted preferentially. After the packet is transmitted, storage resources occupied by the packet which has been transmitted can be further released by calling resource release software (Free Buffer Pool).

The forwarding process of forwarding a packet in the best-effort forwarding method (also called best-effort flow) has been described above.

However, the existing best-effort flow forwarding process lacks support for DetNets and cannot implement DetNet flow forwarding.

In view of this, an embodiment of the present application provides a method for transmitting DetNet flow, which superimposes DetNet flow forwarding on the basis of best-effort flow forwarding, providing compatibility of best-effort flow forwarding and DetNet flow forwarding, while ensuring that DetNet flow forwarding is not affected by best-effort flow forwarding. The method for transmitting DetNet flow provided by the embodiment of the present application will be described below.

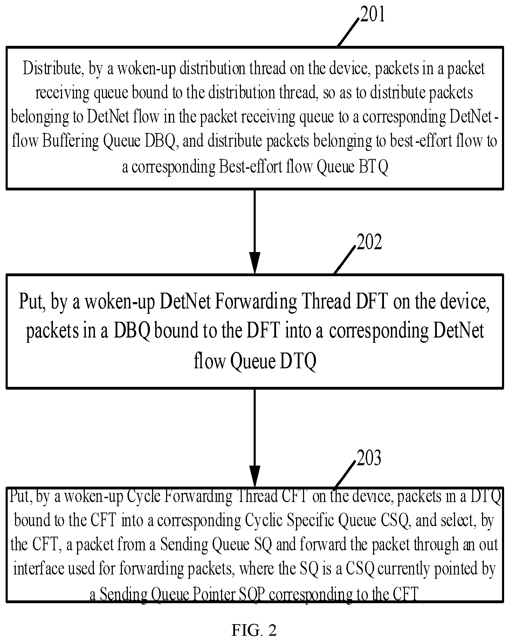

Referring to FIG. 2, FIG. 2 is a flowchart illustrating a method for transmitting DetNet flow provided by an embodiment of the present application. This process applies to a network device. The embodiment of the present application does not specifically limit the specific structural form of the network device, for example, it can be a mid-to-low-end router, or it can be a high-end router that has high performance requirements and supports more CPU cores, and so on, which is not specifically limited by the embodiment, so that the embodiment of the present application can have wide applicability and expansibility.

As described above, the embodiment of the present application superimposes DetNet flow forwarding on the basis of best-effort flow forwarding. In order to make the method provided by the embodiment of the present application more apparent, the following modification is first made in order to superimpose DetNet flow forwarding on the basis of best-effort flow forwarding.
1) Providing distribution threads (DisThr). DetNet flow is very sensitive to delay and jitter, and tends to be affected by platform service processing such as best-effort flow forwarding. In order to prevent the platform service processing from affecting the forwarding of the DetNet flow, distribution threads are newly provided to the above-mentioned network device in the embodiment of the present application.

Optionally, in the embodiment, the number of distribution threads is set according to the number of packet receiving queues, and one distribution thread is bound to at least one packet receiving queue. Specifically, the distribution thread is used to distribute packets in the bound packet receiving queue, so as to distribute packets belonging to the DetNet flow in the packet receiving queue to the corresponding DetNet-flow Buffering queue (DBQ), and distribute packets belonging to best-effort flow to the corresponding Best-effort flow Queue (BTQ).

Optionally, the DBQs and the packet receiving queues are in one-to-one correspondence. For example, packets belonging to DetNet flow in packet receiving queue 1 are distributed to DBQ1, and packets belonging to DetNet flow in packet receiving queue 2 are distributed to DBQ2, and so on... DBQ is used to buffer the packets distributed by the distribution thread and belonging to DetNet flow. The distribution thread distributing packets is decoupled from the platform processing packets belonging to DetNet flow, so that the processing of the distribution thread can be simplified, which is efficient and non-blocking, and the processing of packets belonging to DetNet flow can be independent.

Optionally, the BTQs and the packet receiving queues are in one-to-one correspondence. For example, packets belonging to best-effort flow in packet receiving queue 1 are distributed to BTQ1, and packets belonging to best-effort flow in packet receiving queue 2 are distributed to BTQ2, and so on... BTQ is used to buffer the packets distributed by the distribution thread and belonging to best-effort flow. The distribution thread distributing packets is decoupled from the platform processing packets belonging to best-effort flow, so that the processing of the distribution thread can be simplified, which is efficient and non-blocking, and the processing of packets belonging to best-effort flow can be independent.

As can be seen above, the process of distributing packets by the distribution thread is a non-blocking process. Even if the platform can process the DetNet flow, the distribution thread can still ensure that packets, such as those belonging to DetNet flows, can be distributed in a timely manner.

It should be noted that, in order to prevent too many best-effort flows resulting in untimely DetNet flow distribution, in a specific implementation, it is necessary to ensure that the above-mentioned distribution threads occupy enough CPU resources. CPU cores assigned to a distribution thread are no longer assigned to other threads.

2) Providing a DetNet forwarding core module. Optionally, in the embodiment of the present application, a DetNet forwarding core module can be provided to the driver software of the network device. In an example, the DetNet forwarding core module at least includes: a DetNet forwarding thread (DFT) and a cycle forwarding thread (CFT).

Optionally, in the embodiment, the number of DFTs is set according to the number of DBQs and the DetNet flow load. In an application, one DFT is bound to at least one DBQ. The DFT is used to put packets in the bound DBQ into the corresponding DetNet flow queue (DTQ).

Optionally, in the embodiment, the number of CFTs is set according to the number of DTQs and the DetNet flow load. In application, one DFT is bound to at least one DTQ. The CFT is used to put packets in the bound DTQ into the corresponding Cycle Specified Queue (CSQ). Optionally, in the embodiment, the CFT is also bound to at least one CSQ of at least one interface, and is used to fetch a packet from the specified CSQ within a specified cycle and forward the packet through an out interface used for forwarding the packet.

3) Modifying the existing BFT. Previously, the BFT took out a packet from the packet receiving queue and forwarded the packet, but in the embodiment, the BFT is modified to take out a packet from the bound BTQ and forward the packet.

4) Modifying the transmitting module (TransMod) so that the transmitting module provides DetNet flow forwarding (such as providing hardware adaptation for DetNet flow forwarding, and the like). Optionally, in one embodiment, when forwarding DetNet flow, it can be indicated at the out interface that packets belonging to DetNet flow have the highest priority, so as to ensure that the packets belonging to the DetNet flow are preferentially forwarded, and at the same time, performing rate-limit on best-effort flow forwarding.

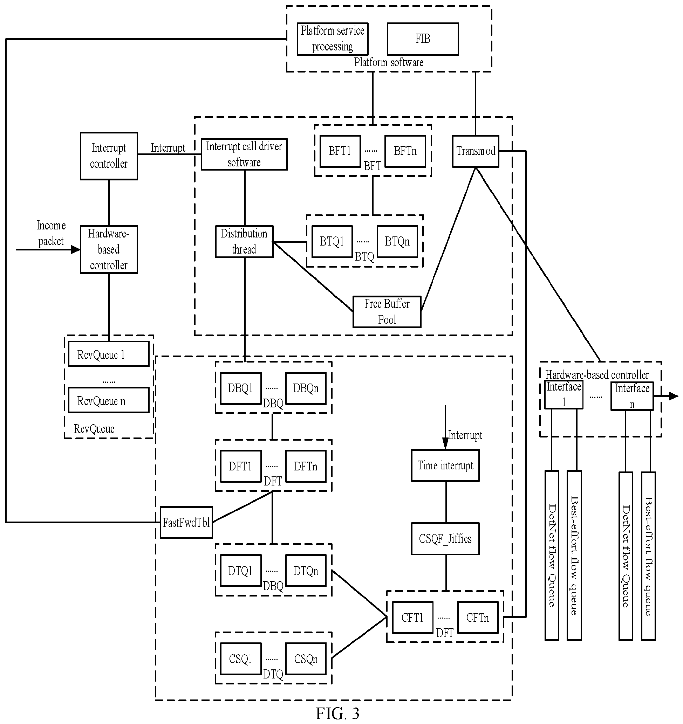

The above has briefly described modifications for superimposing DetNet flow forwarding on top of best-effort flow forwarding. Through the above modifications, the DetNet flow forwarding can be additionally provided while being compatible with the existing best-effort QoS forwarding, and keeping DetNet flow forwarding not to be affected by the best-effort flow forwarding. FIG. 3 shows an example of a frame structure diagram after modification on the basis of the frame shown in FIG. 1.

Based on above-mentioned modification, the method provided by the embodiment of the present application will be described below.

As shown in FIG. 2, the process can include the following steps.

In step 201, a woken-up distribution thread on the device distributes packets in a packet receiving queue bound to the distribution thread, so as to distribute packets belonging to DetNet flow in the packet receiving queue to a corresponding DBQ, and distribute packets belonging to best-effort flow to a corresponding BTQ.

The packet receiving queue here is as described above, and stores external packets received by the network device through the local interface.

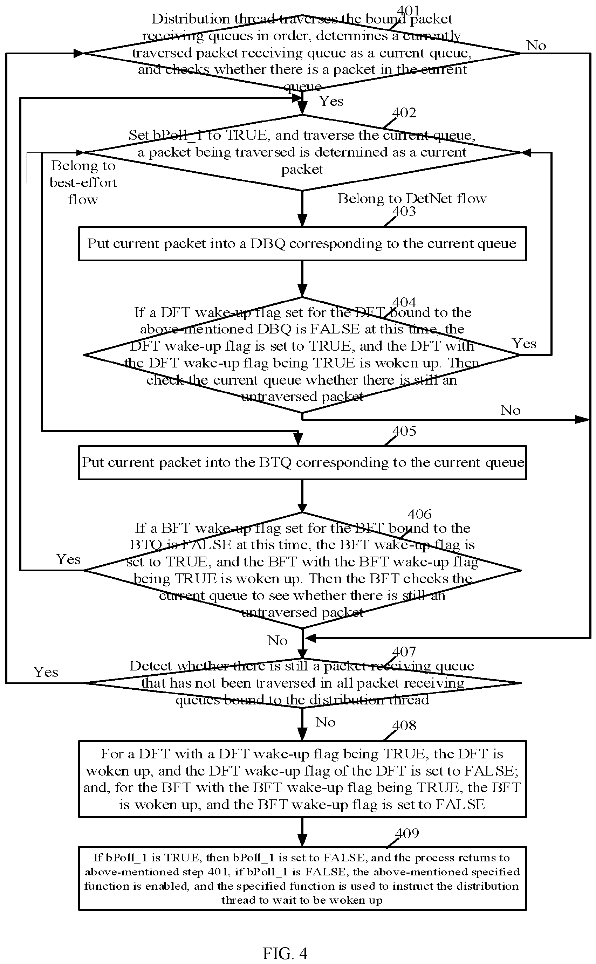

As for how the distribution thread distributes the packets in the bound packet receiving queue, for details, reference can be made to the implementation of the distribution thread described with the example in FIG. 4 later, which will not be repeated here.

In the embodiment, the distribution thread can be woken up through an interrupt, and can also be woken up through other methods, such as a polling method, which is not specifically limited in the embodiment.

In step 202, a woken-up DFT on the device puts packets in a DBQ bound to the DFT into a corresponding DTQ.

In the embodiment, the DFT can be woken up by the distribution thread at an appropriate time, which will be described with examples below. However, the DFT can also be woken up in other ways, which is not specifically limited in the embodiment.

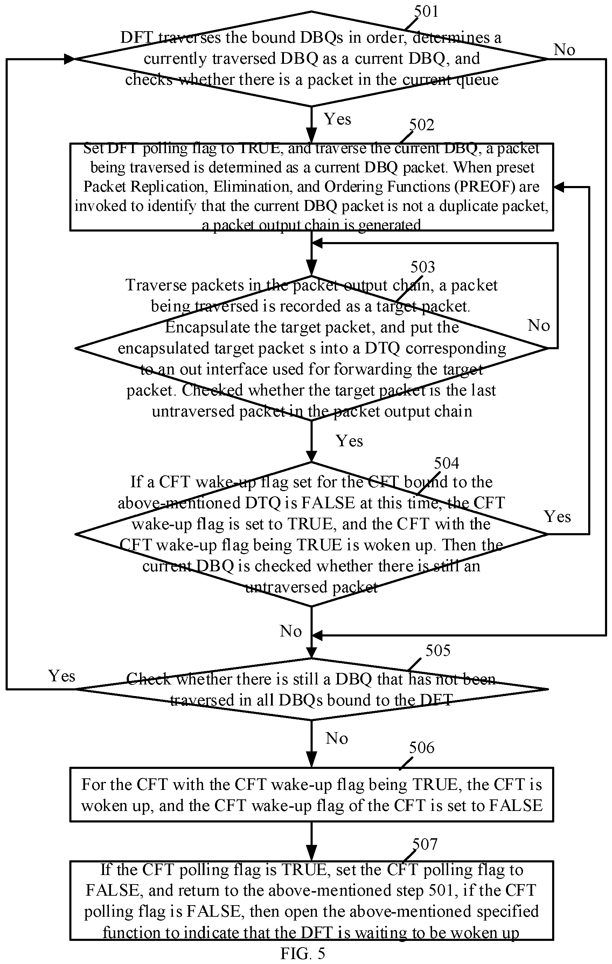

As for how the DFT puts the packets in the bound DBQs into the corresponding DTQs, for details, reference can be made to the implementation process of the DFT described with the example in FIG. 5 later, which will not be repeated here.

In step 203, a woken-up cycle forwarding thread CFT on the device puts packets in a DTQ bound to the CFT into a corresponding cyclic specific queue (CSQ), and the CFT selects a packet from a sending queue SQ and forwards the packet through an out interface used for forwarding packets, where the SQ is a CSQ currently pointed by a sending queue pointer SQP corresponding to the CFT.

In the embodiment, the CFT can be woken up by the DFT at an appropriate time, which will be described with an example below. However, the CFT can also be woken up in other ways, for example, the CFT is woken up by default after the CFT is newly created, or if the CFT detects a specified event after the CFT is newly created, the CFT is also woken up by default, and so on, which will not be specifically limited by the embodiment. The specified event here refers to an event under which a packet needs to be forwarded in time in the CSQ. An example of this event will be described below, and will not be repeated here.

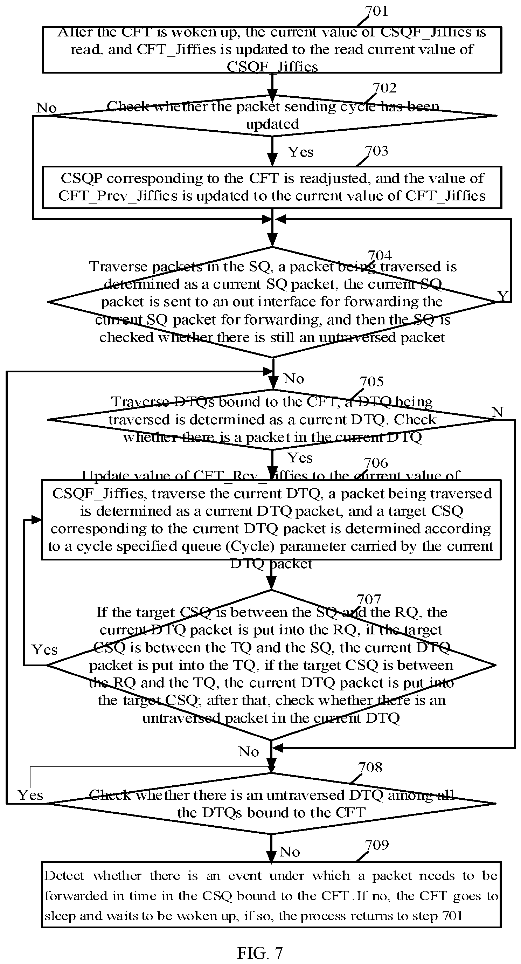

As for how to put the packets in the DTQ bound to the CFT into the corresponding CSQ queue by the CFT, and how to select the packet from the Sending Queue (SQ) and forward the packet through an out interface used for forwarding packets, for details, reference can be made to the implementation process of the CFT described with an example in FIG. 7 below, which will not be repeated here.

In the embodiment, each interface corresponds to a plurality of CSQs, for example, three CSQs. Here, each CSQ includes at least:
(1) a Cyclic Specific Queue Descriptor (CSQD), which is used to describe the CSQ;
(2) a Buffer Descriptor Queue (BDQ). In the embodiment, a queue element in the BDQ describes information of a data block, which can at least include: information on a memory block where the data is located, a starting position of the data, a length of the data, and so on, which are not specifically limited in the embodiment.

Optionally, in the embodiment, each cyclic specific queue descriptor can include at least:
a Queue Head (QH), which is used to point to a corresponding BDQ;
a head (Head), which is used to point to a current position of the queue head, when the CSQ is empty, Head is 0, indicating that the next data packet to be enqueued occupies the 0th position, and Head is increases by 1 after each entry of data;
QLen, a queue length, indicating a number of packets that the queue can store. When the length of the Head is QLen, it indicates that the queue is full;
CurBytes, a current number of bytes in the queue;
MaxBytes, a capacity of bytes of the current queue.

In addition, in the embodiment, the CFT manages a structure of Cyclic Specific Queue Pointer (CSQP). The CSQP consists of 3 members:
SQP: Sending Queue Pointer, the CSQ pointed by the SQP,
indicating the CSQ being sent in the current cycle (the CSQ is also referred to as a Sending Queue SQ);
RQP: Receiving Queue Pointer, the CSQ pointed by the RQP, indicating the CSQ being received in the current cycle (the CSQ is also referred to as a Receiving Queue RQ).

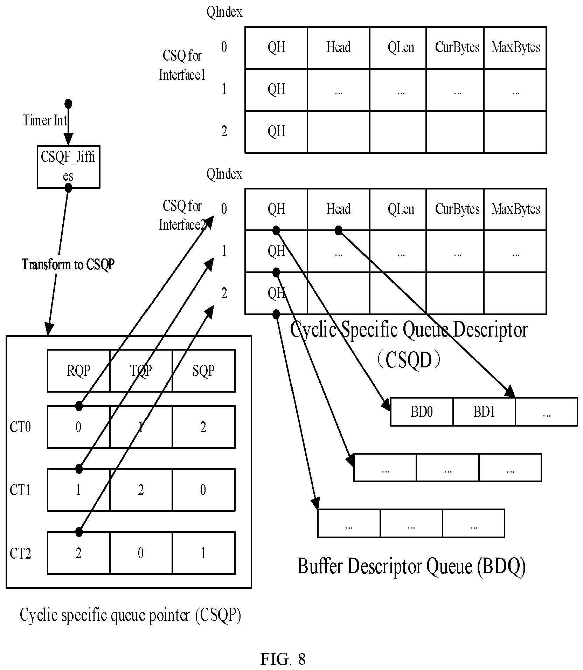

TQP: Tolerating Queue Pointer, the CSQ pointed by the TQP, indicating the CSQ received in the current cycle after the RQ is fully received (the CSQ is also referred to as a Tolerating Queue TQ at this time). Based on the above description, FIG. 8 illustrates a schematic diagram of the relationship between the CSQP and the CSQ.

So far, the process shown in FIG. 2 has been given.

Through the process shown in FIG. 2, the embodiment realizes providing DetNet flow forwarding on the basis of the existing best-effort flow forwarding.

Further, through the above distribution thread, DFT, and CFT, it can be ensured that the DetNet flow forwarding is not affected by best-effort flow forwarding, and the mutual compatibility of existing best-effort flow forwarding and DetNet flow forwarding can be guaranteed.

The distribution thread implementation process will be described below through the process shown in FIG. 4:
Referring to FIG. 4, FIG. 4 is a flowchart for implementing a distribution thread provided by an embodiment of the present application. In the embodiment, a corresponding thread polling flag (denoted as bPoll_1) is set for the distribution thread, and initially, bPoll_1 is set to FALSE. When the distribution thread is woken up, bPoll_1 is also FALSE at this time. In the embodiment, the distribution thread can be woken up through an interrupt or other means.

As shown in FIG. 4, the woken-up distribution thread can perform the following steps.

In step 401, the distribution thread traverses the bound packet receiving queues in order, determines a currently traversed packet receiving queue as a current queue, and checks whether there is a packet in the current queue, if so, step 402 is performed, if no, the process proceeds to step 407.

In step 402, bPoll_1 is set to TRUE, and the current queue is traversed, a packet being traversed is determined as a current packet, when it is identified that the current packet belongs to DetNet flow, then step 403 is performed, when it is identified that the current packet belongs to best-effort flow, step 405 is performed.

This step 402 is performed when it is found that there is a packet in the current queue. When there is a packet in the current queue, bPoll_1 is set to TRUE, which means that the distribution thread is currently entering a polling process. In order to reduce thread scheduling overhead and prevent the wake-up operation from affecting the polling of the distribution thread, it is necessary to instruct to disable specified function that the distribution thread is set to. Here, disabling the specified function is used to instruct to prevent the distribution thread from entering a sleep state.

In step 403, the current packet is put into a DBQ corresponding to the current queue. Then step 404 is performed.

In the embodiment, for a packet belonging to DetNet flow, the packet will carry a DetNet property (DetProperty). In the embodiment, the DetNet property is not fixed, and the current specification does not provide specific designation, but is set according to actual needs, for example, the value of a field such as DSCP can be set to represent the DetNet property. The embodiment does not specifically limit the DetNet property. However, once the DetNet property is set, it is applied to this step 403 to identify whether the current packet carries the DetNet property. If so, it is identified that the current packet belongs to the DetNet flow, and the current packet is put into the DBQ corresponding to the current queue. Finally, the packets belonging to the DetNet flow are distributed to the DBQ.

Optionally, as an example, in the embodiment, the DBQs and the packet receiving queues are in one-to-one correspondence, for example, a packet in the packet receiving queue numbered 1 is placed in the DBQ numbered 1, and a packet in the packet receiving queue numbered 2 is placed in the DBQ numbered 2, and so on. Finally, according to the corresponding relationship between the DBQs and the packet receiving queues, the current packet identified as belonging to the DetNet flow can be put into the DBQ corresponding to the current queue.

In step 404, if a DFT wake-up flag set for the DFT bound to the above-mentioned DBQ is FALSE at this time, the DFT wake-up flag is set to TRUE, and the DFT with the DFT wake-up flag being TRUE is woken up. Then the current queue is checked whether there is still an untraversed packet. If so, the process continues to traverse untraversed packets and return to the step of determining a packet being traversed as a current packet in step 402; and if not, the process goes to step 407.

In the embodiment, the distribution thread will set one corresponding DFT wake-up flag for each DFT. Initially, the DFT wake-up flag corresponding to each DFT is set to FALSE.

Through step 404, the corresponding DFT can be woken up in time, so that the wake-up DFT can put the packet in the bound DBQ into the corresponding DTQ in time. For details, reference can be made to the following DFT process, which will not be repeated here.

It should be noted that, if the DFT wake-up flag set for the DFT bound to the above-mentioned DBQ is TRUE at this time, then in this step 404, the untraversed packet can be directly traversed when there is still an untraversed packet in the current queue. For the packet being traversed, the process returns to the step of determining a packet being traversed as a current packet in step 402, and if there is no untraversed packet in the current queue, step 407 is performed.

In step 405, the current packet is put into the BTQ corresponding to the current queue. Then step 406 is performed.

Optionally, as an example, in the embodiment, the BTQs and the packet receiving queues are in one-to-one correspondence, for example, a packet in the packet receiving queue numbered 1 is placed in the BTQ numbered 1, and a packet in the packet receiving queue numbered 2 is placed in the BTQ numbered 2, and so on. Finally, according to the corresponding relationship between the BTQs and the packet receiving queues, the current packet identified as belonging to the best-effort flow can be put into the DBQ corresponding to the current queue.

In step 406, if a BFT wake-up flag set for the BFT bound to the BTQ is FALSE at this time, the BFT wake-up flag is set to TRUE, and the BFT with the BFT wake-up flag being TRUE is woken up. Then the BFT checks the current queue to see whether there is still an untraversed packet. If so, the process continues to traverse untraversed packets and return to the step of determining a packet being traversed as a current packet in step 401; and if not, step 407 is performed.

Through step 406, the BTQ bound to the above-mentioned BFT can be woken up in time, so that the woken-up BFT can forward the packets in the BTQ in time.

In step 407, if there is no packet in the current queue or there is no packet that has not been traversed in the current queue, it is detected whether there is still a packet receiving queue that has not been traversed in all packet receiving queues bound to the distribution thread. If so, the process continues to traverse other packet receiving queues bound to the distribution thread that have not been traversed, and return to the step of determining a currently traversed packet receiving queue as a current queue in step 401, otherwise, the process goes to step 408.

In step 408, for a DFT with a DFT wake-up flag being TRUE, the DFT is woken up, and the DFT wake-up flag of the DFT is set to FALSE; and, for the BFT with the BFT wake-up flag being TRUE, the BFT is woken up, and the BFT wake-up flag is set to FALSE. Then step 409 is performed.

The step 408 is performed in order to wake up the DFT and BFT that have been woken up before but has entered sleep during the process of traversing the packet receiving queues by the distribution thread, to ensure that both the DetNet flow and the best-effort flow are forwarded in time. However, if the DFT with the DFT wake-up flag being TRUE is not currently sleeping (for example, it is still running), in this step 408, for a DFT with a DFT wake-up flag being TRUE, the DFT wake-up flag of the DFT can be directly set to FALSE. The operation for the BFT with the BFT wake-up flag being TRUE is similar and will not be described again.

In step 409, if bPoll_1 is TRUE, then bPoll_1 is set to FALSE, and the process returns to above-mentioned step 401, if bPoll_1 is FALSE, the above-mentioned specified function is enabled, and the specified function is used to instruct the distribution thread to wait to be woken up.

So far, the process shown in FIG. 4 has been completed.

The implementation process of the distribution process has been described with the process shown in FIG. 4.

The DFT implementation process will be described below with the process shown in FIG. 5.

Referring to FIG. 5, FIG. 5 is a flowchart of DFT implementation provided by the embodiment of the present application. In the embodiment, the DFT can be woken up by the distribution thread (for details, see the process shown in FIG. 4 above). In the embodiment, the DFT can also be woken up in other ways, which are not specifically limited here. In the embodiment, the woken-up DFT is set with a corresponding thread polling flag (referred to as a DFT polling flag), and when the DFT is woken up, the DFT polling flag is FALSE at this time.

As shown in FIG. 5, the woken-up DFT can perform the following steps.

In step 501, the DFT traverses the bound DBQs in order, determines a currently traversed DBQ as a current DBQ, and checks whether there is a packet in the current queue, if so, step 502 is performed, if no, the process proceeds to step 505.

In step 502, a DFT polling flag is set to TRUE, and the current DBQ is traversed, a packet being traversed is determined as a current DBQ packet. When preset Packet Replication, Elimination, and Ordering Functions (PREOF) are invoked to identify that the current DBQ packet is not a duplicate packet, a packet output chain is generated.

This step 502 is performed when it is detected that there is a packet in the current DBQ. When there is a packet in the current DBQ, the DFT polling flag is set to TRUE, which means that the DFT is currently entering a polling process. In order to reduce thread scheduling overhead and prevent the wake-up operation from affecting the polling of the DFT, it is necessary to instruct to disable the specified function that the DFT is set to. Here, disabling the specified function is used to instruct to prevent the DFT from entering a sleep state.

In the embodiment, the DFT is set with the PREOF function. Based on the PREOF function, it can be identified whether the current DBQ packet is a duplicate packet. Here, the PREOF function can be used to identify whether the current DBQ packet and the packet processed by the PREOF function invoked are duplicate packets. When the current DBQ packet is identified as a duplicate packet, the current DBQ packet is discarded, and when there is still an untraversed packet in the current DBQ, the process continues to traverse an untraversed packet, and return to the step of determining a packet being traversed as a current DBQ packet in step 502. Optionally, there are many ways to identify whether the current DBQ packet is a duplicate packet based on the PREOF function, for example, to identify whether the packet sequence number of the current DBQ packet is smaller than a recorded maximum sequence corresponding to the flow to which the current DBQ packet belongs. If so, the current DBQ packet is identified as a duplicate packet, and other methods, which is not specifically limited in the embodiment.

Optionally, in the embodiment, if it is identified based on the PREOF function that the current DBQ packet is not a duplicate packet, the PREOF function can be invoked to generate a packet output chain. As for how to invoke the PREOF function to generate a packet output chain, an example will be described later, and will not be repeated here.

In the embodiment, after the packet output chain is generated, each packet in the packet output chain can be encapsulated as a packet and put into the DTQ corresponding to the out interface used for forwarding the packet. Details can be referred to step 503.

In step 503, packets in the packet output chain are traversed, a packet being traversed is recorded as a target packet. The target packet is encapsulated, and the encapsulated target packet is put into a DTQ corresponding to an out interface used for forwarding the target packet. It is checked whether the target packet is the last untraversed packet in the packet output chain. If so, the process goes to step 504. If not, the untraversed packets in the packet output chain are traversed, and the process returns to the step of recording the packet being traversed as the target packet.

Optionally, in the embodiment, one DTQ is set corresponding to each out interface. For convenience of description, for example, a DTQ corresponding to the out interface 1 is denoted as DTQ1, a DTQ corresponding to the out interface 2 is denoted as DTQ2, and so on. Based on this, after determining the out interface used for forwarding the target packet, the target packet is encapsulated and the encapsulated target packet is put into the DTQ corresponding to the out interface used for forwarding the target packet. If the out interface used for forwarding the target packet is out interface 1, the encapsulated target packet is put into the DTQ corresponding to the out interface used for forwarding the target packet, namely DTQ 1.

As for how to encapsulate the target packet, an example will be described later, which will not be repeated here.

Finally, through the above-mentioned step 503, the packet in the DBQ can be put into the DTQ.

In step 504, if a CFT wake-up flag set for the CFT bound to the above-mentioned DTQ is FALSE at this time, the CFT wake-up flag is set to TRUE, and the CFT with the CFT wake-up flag being TRUE is woken up. Then the current DBQ is checked whether there is still an untraversed packet. If so, the process continues to traverse untraversed packets and return to the step of determining a packet being traversed as a current packet in step 502; and if not, the process goes to step 505.

In the embodiment, the DFT will set one corresponding CFT wake-up flag for each CFT. Initially, the CFT wake-up flag corresponding to each CFT is set to FALSE.

Through step 504, the CFT bound to the above-mentioned DTQ can be woken up in time, so that the wake-up CFT can put the packet in the bound DTQ into the corresponding CSQ in time, and select the packet from the SQ and forward the packet through the out interface for forwarding the packet, as shown in FIG. 7 below for details.

It should be noted that, if the CFT wake-up flag set for the CFT bound to the above-mentioned DTQ is TRUE, then in this step 504, the untraversed packet can be directly traversed when there is an untraversed packet in the current DBQ and the process returns to the step of determining a packet being traversed as a current DBQ packet in step 502, and when there is no untraversed packet in the current DBQ, step 505 is performed.

In step 505, if there is no packet in the current DBQ or there is no packet that has not been traversed in the current DBQ, it is checked whether there is still a DBQ that has not been traversed in all DBQs bound to the DFT. If so, the process continues to traverse the DBQ that has not been traversed and the process returns to the step of determining the currently traversed DBQ as a current DBQ in step 501; otherwise, step 506 is performed.

In step 506, for the CFT with the CFT wake-up flag being TRUE, the CFT is woken up, and the CFT wake-up flag of the CFT is set to FALSE. Then step 507 is performed.

The step 506 is performed in order to wake up the CFT that has been woken up before but has entered sleep during the process of traversing the DBQ by the DFT, so as to ensure the reliability of DetNet flow forwarding.

In step 507, if the CFT polling flag is TRUE, set the CFT polling flag to FALSE, and return to the above-mentioned step 501, if the CFT polling flag is FALSE, then open the above-mentioned specified function to indicate that the DFT is waiting to be woken up.

So far, the process shown in FIG. 5 has been completed.

The implementation process of DFT has been described with the process shown in FIG. 5.

Below, how to invoke the PREOF function to generate a packet output chain in the process shown in FIG. 5 will be described.

Optionally, as an embodiment, the example of invoking the PREOF function to generate a packet output chain can include the following steps.

In step a11, it is identified whether the current DBQ packet is an out-of-order packet, if not, the process goes to step a12, and if so, the process goes to step a13.

Optionally, in the present embodiment, identifying whether the current DBQ packet is an out-of-order packet has many implementations. For example, when identifying the service flow to which the current DBQ packet belongs, if the packet sequence number of the current DBQ packet is larger than a recorded maximum sequence number of packets belonging to the above-mentioned service flow processed by invoking the PREOF function, the current DBQ packet is determined to be an out-of-order packet when the packet sequence number of the current DBQ packet is not adjacent to the above-mentioned maximum sequence number, otherwise, it is determined that the current DBQ packet is not an out-of-order packet.

In step a12, the current DBQ packet is put into the above packet output chain.

This step a12 is performed on the premise that the current DBQ packet is not identified as an out-of-order packet. Once it is identified that the current DBQ packet is not an out-of-order packet, the current DBQ packet can be directly put into the above packet output chain, and the recorded maximum sequence number is further updated to the packet sequence number of the current DBQ packet, for determining whether a subsequent DBQ packet is an out-of-order packets.

In step a13, a service flow to which the current DBQ packet belongs is determined, if the current DBQ packet satisfies a condition which refers to that the current DBQ packet has been successfully sequenced with at least one recorded packet which belongs to the service flow and has been processed by invoking the PREOF function within a preset time window, the current DBQ packet, at least one recorded packet which has been successfully sequenced with the current DBQ packet, recorded packets which belong to the service flow and have been processed by invoking the PREOF function outside the preset time window but have not yet been put into the packet output chain are put into the packet output chain; and if the current DBQ packet does not satisfy the above condition, recorded packets which belong to the service flow and have been processed by invoking the PREOF function outside the preset time window but have not yet been put into the packet output chain are put into the above-mentioned packet output chain.

This step a13 is performed on the premise that the current DBQ packet is identified as an out-of-order packet. Once it is identified that the current DBQ packet is an out-of-order packet, the service flow to which the current DBQ packet belongs (the specific service flow information can be carried in the packet) is identified, and then it is checked whether the at least one recorded packet which belongs to the service flow and has been processed by invoking the PREOF function within a preset time window can be successfully sequenced with the current DBQ packet (that is, whether the sequence number of the at least one packet is continuous with the sequence number of the current DBQ packet). For example, the packet sequence number of the current DBQ packet is 8, and the packet sequence number of a recorded packet belonging to the above service flow and processed by invoking the PREOF function within the preset time window is 7, which means that at least one recorded packet which belongs to the service flow and has been processed by invoking the PREOF function within the preset time window has been successfully sequenced with the current DBQ packet. It should be noted that, the above-mentioned preset time window can be set according to actual requirements, for example, 10us since the current time, etc., which is not specifically limited in the embodiment.

As an embodiment, if the current DBQ packet and the at least one recorded packet which belongs to the service flow and has been processed by invoking the PREOF function within the preset time window have been successfully sequenced, the current DBQ packet, at least one recorded packet which has been successfully sequenced with the current DBQ packet, recorded packets which belong to the service flow and have been processed by invoking the PREOF function outside the preset time window but have not yet been put into the packet output chain are put into the packet output chain. The packet output chain is finally generated.

As an embodiment, if the current DBQ packet and the at least one recorded packet which belongs to the service flow and has been processed by invoking the PREOF function within the preset time window cannot be successfully sequenced, the recorded packets which belong to the service flow and have been processed by invoking the PREOF function outside the preset time window but have not yet been put into the packet output chain are put into the packet output chain. The packet output chain is finally generated. It should be noted that, if the current DBQ packet and the at least recorded one packet belonging to the above-mentioned service flow and processed by invoking the PREOF function within the preset time window cannot be successfully sequenced, then optionally, the current DBQ packet can be further recorded. DBQ packet, and the PREOF function is invoked to process a time stamp of the current DBQ packet.

Finally, through the above steps a11 to a13, the generation of the packet output chain can be implemented.

Below, how to encapsulate the target packet in the above-mentioned step 503 will be described.

Optionally, in the embodiment, encapsulating the target packet in the above step 503 can include the following steps.

In step b 11, it is determined whether the target packet is an edge access packet, if so, step b12 is performed, otherwise, step b 13 is performed.

Optionally, in the embodiment, it can be determined whether the target packet is an edge access packet depending on whether the target packet is encapsulated with network information. For example, if the target packet is not encapsulated with network information such as SR information, etc., it can be determined that the target packet is an edge access packet, otherwise, it can be determined that the target packet is not an edge access packet. It should be noted that, here is only an example to describe how to determine whether the target packet is an edge access packet, and is not used for limitation.

In step b12, a first type of encapsulation is performed on the target packet.

This step b12 is performed on the premise that the target packet is an edge access packet. When it is determined that the target packet is an edge access packet, as described in step b12, the first type of encapsulation can be performed on the target packet.

Optionally, when the first type of encapsulation is performed on the target packet, the embodiment introduces a new concept: fast forwarding table (FastFwdTbl). As an example, the fast forwarding table can be obtained by transforming routing information in a DetNet. DFT can quickly obtain the out interface for the target packet by querying the fast forwarding table, so as to find the relevant DTQ (that is, the DTQ corresponding to the out interface).

In the embodiment, the DetNet flow is forwarded based on the fast forwarding table, and its purpose is to separate it from the best-effort forwarding process, so as to avoid the DetNet flow being affected by the best-effort flow forwarding, and shorten the DetNet flow forwarding process, to speed up DetNet flow forwarding and provide guarantee for DetNet flow forwarding.

In the specific implementation, compared with the best-effort FIB table, the fast forwarding table has a smaller capacity and faster lookup, and the overhead of the lookup table is not much different, thereby reducing the uncertainty factor.

As an embodiment, optionally, the fast forwarding table can at least include: Destination IP (destination IP address), Source IP (source IP address), Destination Port (destination port), Source Port (source port), Proto (Protocol), Differentiated Services Code Point (DSCP), Out Interface (OutIf), Tunnel Index (LIndex).

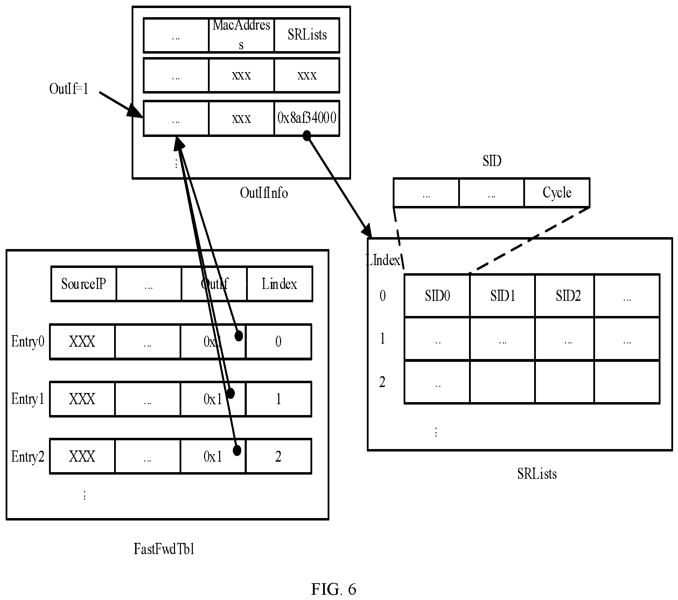

Based on the above-mentioned fast forwarding table, the example of step b12 can be: based on the packet feature information carried by the target packet such as source IP address, destination IP address, etc., finding OutIf and LIndex in the fast forwarding table; finding OutIfInfo corresponding to OutIf in all created out interface information (OutIfInfo); where OutIfInfo at least includes out interface information such as MAC address, pointer to segment route list (SRLists) based on out interface (here, segment route SR is used as an example for description); then, obtaining the corresponding SRList according to the LIndex and the SRLists pointer, and encapsulating the target packet based on the MAD address in the SRList and OutIfInfo, and finally implementing the first type of encapsulation on the target packet. FIG. 6 illustrates a schematic diagram of the association relationship between the fast forwarding table and OutIfInfo and SRLists.

In step b13, a second type of encapsulation is performed on the target packet.

This step b13 is performed on the premise that it is determined that the target packet is not an edge access packet. When it is determined that the target packet is not an edge access packet, it means that the above-mentioned first type of encapsulation has been performed on the target packet. Based on this, corresponding to the first type of encapsulation shown in the above step b12, in this step b13, the OutIf can be determined according to the SID in the SRLists in which the target packet is encapsulated, and the corresponding OutIfInfo (for example, including at least the MAC address) can be searched out based on the OutIf etc.; encapsulation is replaced on the target packet according to the obtained OutIfInfo (such as including at least the MAC address, etc.), such as replacing the source MAC address in the encapsulated Layer 2 header with the MAC address of the out interface in the OutIfInfo, etc. which is not particularly limited in the embodiment.

Finally, through the above steps b11 to b13, how to encapsulate the target packet in step 503 can be implemented.

The CFT implementation process will be described below with the process shown in FIG. 7.

Referring to FIG. 7, FIG. 7 is a flowchart of CFT implementation provided by the embodiment of the present application. In the embodiment, the CFT can be woken up by the DFT according to the description of step 504 or step 506 in the process shown in FIG. 5 above. As another embodiment, when a CFT is newly created on a network device, the CFT can also be woken up directly. For example, when a CFT is newly created on a network device, if it is detected that there is a packet in the CSQ bound to the CFT that need to be forwarded in time, the CFT can be woken up directly.

Before describing the flow shown in FIG. 7, the settings for each CFT will described below.

As an embodiment, three corresponding local variables can be set for each CFT: CFT _Jiffies, CFT_prev_Jiffies, CFT_Rcv_Jiffies.

CFT _Jiffies can indicate a current processing cycle, which can be recorded as a current processing cycle variable. CFT_prev_Jiffies is used to indicate a historical cycle and can be recorded as a historical cycle variable. CFT Rcv_Jiffies is used to record a current processing and receiving cycle, which can be recorded as a packet receiving cycle variable.

Based on the above description, as shown in FIG. 7, the process can include the following steps.

In step 701, after the CFT is woken up, the current value of CSQF _Jiffies is read, and CFT _Jiffies is updated to the read current value of CSQF _Jiffies. Then step 702 is performed.

In step 702, it is checked whether the packet sending cycle has been updated, if so, the process goes to step 703, if not, the process goes to step 704.

As described above, CFT _Jiffies represents a current processing cycle variable, and CFT_Prev_Jiffies represents a historical cycle variable. Therefore, based on CFT_Jiffies and CFT_Prev_Jiffies, it can be determined whether the packet sending cycle has been updated. For example, when CFT _Jiffies is not equal to CFT_Prev_Jiffies, it indicates that the cycle has been performed, and the packet sending cycle has been updated, for example, the cycle proceeds from the first cycle to the second cycle; and when CFT _Jiffies is equal to CFT_Prev_Jiffies, it means that the packet sending cycle has not been updated.

In step 703, a CSQP corresponding to the CFT is readjusted, and the value of CFT_Prev_Jiffies is updated to the current value of CFT _Jiffies. Then step 704 is performed.

As described above, CSQP at least includes: SQP, RQP, TQP, then optionally, as an embodiment, the sequence number of the CSQ pointed by the readjusted SQP is determined by a remainder from a modulo operation on a total number d of CSQs bound to CFT according to CFT _Jiffies. Here the remainder can be denoted as Rem.

The sequence number of the CSQ pointed by the readjusted RQP is determined according to the result by performing a modulo operation on the number d based on the sum of Rem and the specified jitter cycle number Jitter. For example, the sequence number of the CSQ pointed by the readjusted RQP is obtained by the following formula: (Rem+Jitter) mod d.

The sequence number of the CSQ pointed by the readjusted TQP can be determined according to the following formula: (d-1+Rem-Jitter) mod d.

It should be noted that the above-mentioned manner of readjusting the CSQP corresponding to the CFT is only an example, and is not intended to be limiting.

In step 704, the packets in the SQ are traversed, a packet being traversed is determined as a current SQ packet, the current SQ packet is sent to an out interface for forwarding the current SQ packet for forwarding, and then the SQ is checked whether there is still an untraversed packet. If so, the process continues to traverse an untraversed packet and returns to the step of determining a packet being traversed as a current SQ packet in step 704; if not, the process goes to step 705

In step 705, DTQs bound to the CFT are traversed, a DTQ being traversed is determined as a current DTQ. It is checked whether there is a packet in the current DTQ, if so, the process goes to step 706, if not, the process goes to step 708.

This step 705 is performed when there is no untraversed packet in the SQ (that is, the SQ is empty).

In step 706, the value of CFT Rcv_Jiffies is updated to the current value of CSQF _Jiffies, the current DTQ is traversed, a packet being traversed is determined as a current DTQ packet, and a target CSQ corresponding to the current DTQ packet is determined according to a cycle specified queue (Cycle) parameter carried by the current DTQ packet. Then step 707 is performed.

Based on the CSQF_Jiffies and CFT_Rcv_Jiffies described above, here the value of CFT_Rcv_Jiffies is updated to the current value of CSQF _Jiffies, in order to control the timely execution of the CFT thread and reduce the scheduling delay.

In the embodiment, the cycle specified queue (Cycle) parameter carried by the current DTQ packet, the Cycle parameter indicates the target CSQ, based on this, it is easy to determine the target CSQ corresponding to the current DTQ packet based on the indication of the Cycle parameter.

In step 707, if the target CSQ is between the SQ and the RQ, the current DTQ packet is put into the RQ, if the target CSQ is between the TQ and the SQ, the current DTQ packet is put into the TQ, if the target CSQ is between the RQ and the TQ, the current DTQ packet is put into the target CSQ; after that, it is checked whether there is an untraversed packet in the current DTQ. If so, the process continues to traverse an untraversed packet and returns to the step of determining a packet being traversed as a current DTQ packet in step 706, if not, the process goes to step 708.

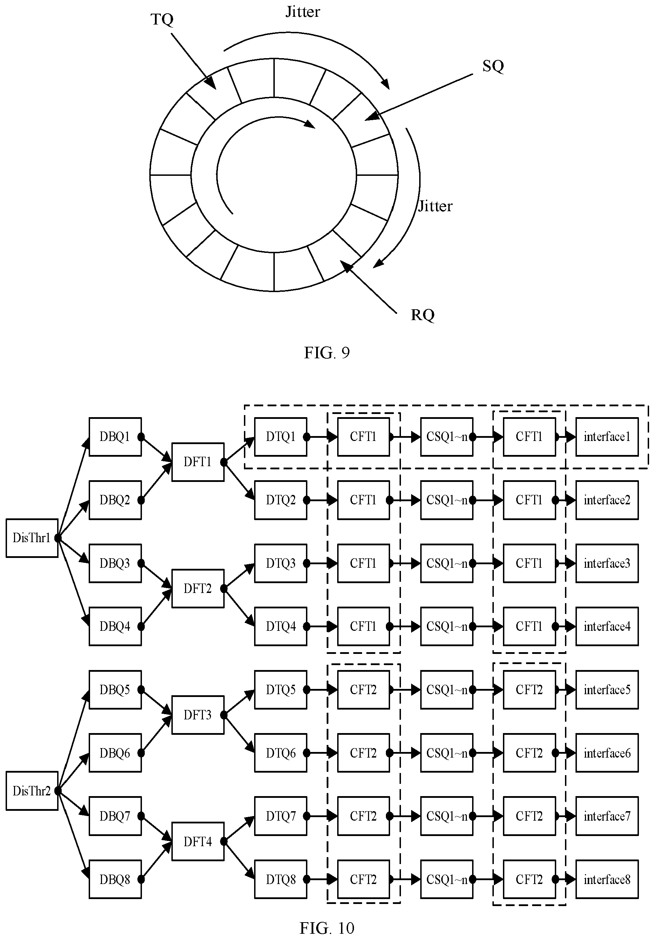

In the embodiment, when the target CSQ is between the SQ and the RQ, it indicates that the current DTQ packet may have arrived with a delay. In order to ensure that the current DTQ packet that has arrived with a delay can be forwarded in a short time, the current DTQ packet can be put into the RQ. when the target CSQ is between the TQ and the SQ, it indicates that the current DTQ packet may have arrived ahead of time. In order to ensure that other packets can be forwarded in time, the current DTQ packet that has arrived ahead of time can be forwarded after waiting for a relatively long time, so the current DTQ packet is put into the TQ. FIG. 9 shows an example of the structure among SQ, RQ, and TQ.

In step 708, it is checked whether there is an untraversed DTQ among all the DTQs bound to the CFT, if so, the process continues to traverse the DTQs that have not been traversed and returns to step 705 of determining the DTQ being traversed as a current DTQ, otherwise, and step 709 is performed.

In step 709, it is detected whether there is an event under which a packet needs to be forwarded in time in the CSQ bound to the CFT.

If no, the CFT goes to sleep and waits to be woken up, if so, the process returns to step 701.

Here, the event under which the packet needs to be forwarded in time is determined according to the above-mentioned CFT_Jiffies and CFT Rcv_Jiffies. Optionally, when a difference between the value of CFT _Jiffies and the value of CFT RcvJiffies is less than or equal to a specified difference, it is determined that there is an event under which the packet needs to be forwarded in time, otherwise, it is determined that there is no event under which the packet needs to be forwarded in time. Here, the specified difference is preset, for example, can be preset as 10 cycles (a cycle in which the above-mentioned timer generates an interrupt), etc., which is not specifically limited in the embodiment.

So far, the process shown in FIG. 7 has been completed.

The process performed after the CFT is woken up has been described with reference to FIG. 7.

The above has described the process performed after the distribution thread, DFT, and CFT are woken up with an example. As for BFT, after being woken up, it can directly obtain a packet from BTQ and forward it to the out interface for forwarding the packet for forwarding, which will not be described in detail here.

Optionally, in the embodiment, reliability can be guaranteed, and the following constraints can be optionally provided.
1) For each DBQ, there is generally only one distribution thread. Based on the corresponding relationship between the DBQ and the packet receiving queue described above, a one-to-one correspondence among the DBQ, the distribution thread, and the packet receiving queue can finally be realized. Each distribution thread is responsible for distributing packets belonging to DetNet flow in the packet receiving queue to the DBQ corresponding to the distribution thread.
2) For DBQ, one DBQ is generally only bound to one DFT.
3) For DTQ, one DFT is generally responsible for processing incoming packets of one DTQ, and one CFT is bound to be responsible for processing outgoing packets from the DTQ.
4) For CSQ, one CFT is generally responsible for processing incoming packets of one CSQ, and one CFT is bound to be responsible for processing outgoing packets from the CSQ.

Based on the above description, FIG. 10 illustrates operations between threads based on the above constraints. FIG. 10 exemplifies that one interface is associated with one CFT, and the packets output via each interface are scheduled by the CFT associated with the interface.

In addition, in the embodiment, DBQ and DTQ are designed as circular queues to realize lock-free operation and improve concurrency.

It should also be noted that DisThr, DFT, and CFT are real-time priority scheduling threads; DFT and CFT threads do not share CPU cores with other real-time priority threads, nor do they share CPU cores with threads that occupy CPU resources for a long time without releasing the CPU resources.

So far, the description of the method provided in the embodiments of the present application has been given. The apparatus provided in the embodiments of the present application will be described below:

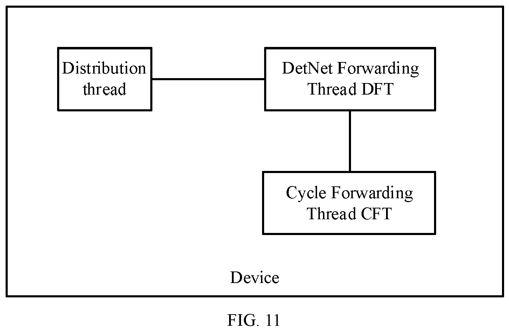

Referring to FIG. 11, FIG. 11 is a structural diagram illustrating an apparatus provided by an embodiment of the present application. The apparatus is applied to a network device, and the apparatus can include:
a distribution thread, after being woken up, distributes packets in the bound packet receiving queue, so as to distribute packets belonging to DetNet flow in the packet receiving queue to the corresponding DBQ, and distribute packets belonging to best-effort flow to the corresponding BTQ; the packets in the packet receiving queue refer to the packets received from outside through a local interface of the network device;
a DetNet forwarding thread DFT, after being woken up, puts packets in the bound DBQ into the corresponding DTQ;
a cycle forwarding thread CFT, after being woken up, puts packets in the bound DTQ into corresponding cyclic specific queue CSQ, and selects a packet from a sending queue SQ and forwards the packet through an out interface used for forwarding packets, where the SQ is a CSQ currently pointed by a sending queue pointer SQP corresponding to the CFT.

Optionally, distributing packets in the bound packet receiving queue by the distribution thread includes:
traversing packet receiving queues bound to the distribution thread, determining a currently traversed packet receiving queue as a current queue, and checking whether there is a packet in the current queue;
if there is a packet in the current queue, traversing the current queue, and determining a packet being traversed as a current packet; if the current packet belongs to DetNet flow, putting the current packet into a DBQ corresponding to the current queue; and if the current packet belongs to best-effort flow, putting the current packet into a BTQ corresponding to the current queue; after that, when there is still an untraversed packet, continuing to traverse an untraversed packet and returning to the step of determining a currently traversed packet as a current packet;
if there is no packet in the current queue or there is no untraversed packet in the current queue, when there is still an untraversed packet receiving queue in all the packet receiving queues bound to the distribution thread, continuing to traverse other packet receiving queues bound to the distribution thread that have not been traversed, and returning to the step of determining a currently traversed packet receiving queue as a current queue.

Optionally, the distribution thread is set with a corresponding thread polling flag, and the thread polling flag has been set to FALSE when the distribution thread is woken up;
when the distribution thread detecting that there is a packet in the current queue, further setting the thread polling flag to TRUE to instruct to disable specified function that the distribution thread is set to; disabling the specified function is used to instruct to prevent the distribution thread from entering a sleep state;
after all the packet receiving queues bound to the distribution thread have been traversed, further: if the thread polling flag is TRUE, setting the thread polling flag to FALSE, and returning to the step of traversing the packet receiving queues bound to the distribution thread; if the thread polling flag is FALSE, instructing to enable the specified function, and enabling the specified function is used to instruct the distribution thread to wait for being woken up.

Optionally, when the distribution thread distributes the packets belonging to the DetNet flow in the packet receiving queue to the corresponding DBQ, further: if a DFT wake-up flag of the DFT bound to the DBQ is set to FALSE, setting the DFT wake-up flag to TRUE, and waking up the DFT with the DFT wake-up flag being TRUE; and/or,
after all the packet receiving queues bound to the distribution thread have been traversed, further: for a DFT with a DFT wake-up flag being TRUE, wakening up the DFT, and setting the DFT wake-up flag of the DFT to FALSE.

The DFT putting the packet in the bound DBQ into the corresponding DTQ includes:
traversing DBQs bound to the DFT, determining a DBQ being traversed as a current DBQ, and checking whether the current DBQ has a packet;
if there is a packet in the current DBQ, traversing the current DBQ, determining a packet being traversed as a current DBQ packet, and when invoking a preset packet duplication elimination and sorting PREOF function to identify that the current DBQ packet is not a duplicate packet, generating a packet output chain, the packet output chain at least includes the current packet; performing packet encapsulation on each DBQ packet in the packet output chain, and putting the encapsulated DBQ packet into a DTQ corresponding to an out interface for forwarding the DBQ packet; after that, when there is still an untraversed packets in the DBQ, continuing to traverse the untraversed packets and returning to the step of determining a packet being traversed as a current DBQ packet;
if there is no packet in the current DBQ or there is no untraversed packet in the current DBQ, when there is still an untraversed DBQ in all DBQs bound to the DFT, continuing to traverse untraversed DBQs and returning to the step of determining the currently traversed DBQ as a current DBQ.

Optionally, the packet output chain is generated by the following steps:
identifying whether the current DBQ packet is an out-of-order packet, if not, putting the current DBQ packet into the packet output chain; if so,
determining a service flow to which the current DBQ packet belongs; if the current DBQ packet has been successfully sequenced with at least one recorded packet which belongs to the service flow and has been processed by invoking the PREOF function within a preset time window, putting the current DBQ packet, at least one recorded packet which has been successfully sequenced with the current DBQ packet, recorded packets which belong to the service flow and have been processed by invoking the PREOF function outside the preset time window but have not yet been put into the packet output chain into the packet output chain; otherwise, putting the recorded packets which belong to the service flow and have been processed by invoking the PREOF function outside the preset time window but have not yet been put into the packet output chain into the packet output chain

Optionally, the DFT is set with a corresponding DFT polling flag, and the DFT polling flag has been set to FALSE when the DFT is woken up;
when detecting that there is a packet in the current DBQ, the DFT further sets the DFT polling flag to TRUE, and disables the specified function that the DFT is set to, and disabling the specified function is used to instruct to prevent the DFT from entering a sleep state;
after all the DBQs bound to the DFT have been traversed, further: if the DFT polling flag is TRUE, setting the thread polling flag to FALSE, and returning to the step of traversing DFTs bound to the woken-up DBQ; if the DFT polling flag is FALSE, enabling the specified function, and enabling the specified function is used to instruct the DFT to wait for being woken up;

Optionally, after the DFT puts the DBQ packet into a DTQ corresponding to an out interface for forwarding the DBQ packet, further: if a CFT wake-up flag set for the CFT bound to the DTQ is FALSE, setting the CFT wake-up flag to TRUE, and waking up the CFT with the CFT wake-up flag being TRUE; and
after all the DBQs bound to the DFT have been traversed, further: for a CFT with a CFT wake-up flag being TRUE, waking up the CFT, and setting the CFT wake-up flag of the CFT to FALSE.

Optionally, putting, by a CFT, packets DTQ bound to the CFT into a corresponding cyclic specific queue CSQ includes:
traversing DTQs bound to the CFT, determining a DTQ being traversed as a current DTQ, and checking whether there is a packet in the current DTQ,
if so, traversing the current DTQ, determining a packet being traversed as a current DTQ packet, and determining a target CSQ corresponding to the current DTQ packet according to a cycle specified queue Cycle parameter carried by the current DTQ packet, if the target CSQ is between the SQ and an RQ, putting the current DTQ packet into the RQ, if the target CSQ is between a TQ and the SQ, putting the current DTQ packet into the TQ, if the target CSQ is between the RQ and the TQ, putting the current DTQ packet into the target CSQ; wherein the RQ is a CSQ currently pointed by a receiving queue pointer RQP corresponding to the CFT; the TQ is a CSQ currently pointed by a tolerating queue pointer TQP corresponding to the CFT; after that, when there is an untraversed packet in the current DTQ, traversing the untraversed packet, and returning to the step of determining a packet being traversed as a current DTQ packet;
if not, or there is no untraversed packet in the current queue, when there is still an untraversed DTQ in all DTQs bound to the CFT, continuing to traverse an untraversed DTQ, and returning to determining a DTQ being traversed as a current DTQ.

Optionally, putting, by a woken-up cycle forwarding thread CFT on the device, packets in a DTQ bound to the CFT into a corresponding cyclic specific queue CSQ is performed when the SQ is empty.

Optionally, selecting, by the CFT, a packet from a sending queue SQ and forwarding the packet through an out interface used for forwarding packets includes:
when determining that a packet sending cycle has been updated, readjusting a cyclic specific queue pointer CSQP corresponding to the CFT, wherein the CSQP at least comprises a SQP; traversing packets in a SQ pointed by the adjusted SQP; determining a packet being traversed as a current SQ packet; and forwarding the current SQ packet by invoking an out interface for forwarding the current SQ packet; after that, when there is still an untraversed packet in the SQ, continuing to traverse the untraversed packet and returning to the step of determining a packet being traversed as a current SQ packet;
when determining that the packet sending cycle has not been updated, traversing packets in the SQ; determining a packet being traversed as a current SQ packet; and forwarding the current SQ packet by invoking an out interface for forwarding the current SQ packet; after that, when there is still an untraversed packet in the SQ, continuing to traverse the untraversed packet and returning to the step of determining a packet being traversed as a current SQ packet.

Optionally, the CSQP further comprises a receiving queue pointer RQP and a tolerating queue pointer TQP; the RQP points to a CSQ which is a receiving queue RQ, and the TQP points to a CSQ which is a tolerating queue TQ;
wherein a sequence number of the CSQ pointed by the readjusted SQP is determined by a remainder from a modulo operation on a number d of CSQs bound to CFT according to a current processing cycle variable CFT_Jiffies set for the CFT;
a sequence number of the CSQ pointed by the readjusted RQP is determined according to a result by performing a modulo operation on the d according to a sum of the remainder and a specified jitter cycle number Jitter;
a sequence number of the CSQ pointed by the readjusted TQP is determined according to the following formula:
(d-1+Rem-Jitter) mod d, where Rem is the remainder.

Optionally, after the CFT has put all packets in all DTQs bound to the CFT into a corresponding cyclic specific queue CSQ, the CFT further detects an event under which a packet needs to be forwarded in time in the CSQ bound to the CFT; if so, returning to the step of selecting, by the CFT, a packet from a sending queue SQ and forwarding the packet through an out interface used for forwarding packets; and if not, waiting to be woken up again.

Optionally, the event under which a packet needs to be forwarded in time is determined according to the current processing cycle variable CFT _Jiffies set for the CFT and a current packet receiving cycle variable CFT_Rcv_Jiffies, when a difference between a value of CFT_Jiffies and a value of CFT Rcv_Jiffies is less than or equal to a specified difference, determining that there is an event under which the packet needs to be forwarded in time, otherwise, determining that there is no event under which the packet needs to be forwarded in time;
wherein when the CFT is woken up, or when detecting that there is an event under which a packet needs to be forwarded in time in the CSQ bound to the CFT, the value of the CFT _Jiffies is updated to a set current value of CSQF _Jiffies, where CSQF _Jiffies is used to indicate implementing specified cyclic queuing and forwarding cycle counting based on a segment routing;
when checking that there is a packet in the current DTQ, the value of CFT_Rcv_Jiffies is updated to the value of CFT _Jiffies.

Optionally, whether the packet sending cycle is updated is determined by:
checking whether the value of the current processing cycle variable CFT _Jiffies set for the CFT is equal to the value of a historical cycle variable CFT_Prev_Jiffies, if so, determining that the packet sending cycle has not been updated, if not, determining that the packet sending cycle has been updated;
after readjusting the cyclic specific queue pointer CSQP corresponding to the CFT, the method further comprises: updating the value of the CFT _Prev _Jiffies to the current value of the CFT_Jiffies.

So far, the description of the device structure provided by the embodiments of the present application is completed.

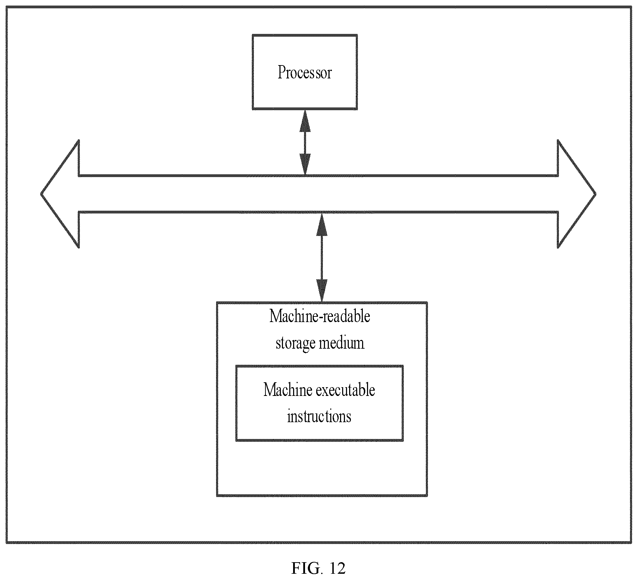

The embodiment of the present application also provides a hardware structure of the apparatus shown in FIG. 11. Referring to FIG. 12, FIG. 12 is a structural diagram of an electronic device provided by an embodiment of the present application. As shown in FIG. 12, the hardware structure can include: a processor and a machine-readable storage medium, where the machine-readable storage medium stores machine-executable instructions that can be executed by the processor; the processor is configured to execute machine-executable instructions to implement the methods disclosed in the above examples of the present application.

Based on the same application concept as the above method, the embodiments of the present application also provide a machine-readable storage medium, where several computer instructions are stored on the machine-readable storage medium, and when the computer instructions are executed by the processor, the methods disclosed in the above examples of the present application can be implemented.

Illustratively, the above-mentioned machine-readable storage medium can be any electronic, magnetic, optical, or other physical storage device that can contain or store information, such as executable instructions, data, and the like. For example, the machine-readable storage medium can be: RAM (Radom Access Memory), volatile memory, non-volatile memory, flash memory, storage drives (such as hard disk drives), solid state drives, any type of storage disks (such as CD-ROM, DVD, etc.), or similar storage media, or a combination thereof.

The systems, devices, modules or units described in the above embodiments can be specifically implemented by computer chips or entities, or by products with certain functions. A typical implementing device is a computer, which can be in the form of a personal computer, a laptop computer, a cellular phone, a camera phone, a smart phone, a personal digital assistant, a media player, a navigation device, an email sending and receiving device, a game control desktop, a tablet, a wearable device, or a combination of any of these devices.

For the convenience of description, when describing the above device, the functions are divided into various units and described respectively. However, when implementing the present application, the functions of each unit can be implemented in one or more software and/or hardware.

As will be appreciated by those skilled in the art, embodiments of the present application can be provided as methods, systems, or computer program products. Accordingly, the present application can take the form of a pure hardware embodiment, a pure software embodiment, or an embodiment combining software and hardware aspects. Furthermore, embodiments of the present application can take the form of a computer program product implemented on one or more computer-usable storage media having computer-usable program code embodied therein, including but not limited to disk storage, CD-ROM, optical storage, and the like.

The present application is described with reference to flowchart illustrations and/or block diagrams of methods, apparatus (systems), and computer program products according to embodiments of the application. It will be understood that each process and/or block in the flowchart illustrations and/or block diagrams, and combinations of processes and/or blocks in the flowchart illustrations and/or block diagrams, can be implemented by computer program instructions. These computer program instructions can be provided to the processor of a general-purpose computer, a special-purpose computer, an embedded processor or other programmable data processing device to produce a machine such that instructions executed by the processor of a computer or other programmable data processing device produce means for implementing the functions specified in one or more of the flowcharts and/or one or more blocks of the block diagrams.

Furthermore, these computer program instructions can also be stored in a computer-readable memory capable of directing a computer or other programmable data processing device to operate in a particular manner, such that the instructions stored in the computer-readable memory produce an article of manufacture containing instruction means implementing the functions specified in the flow or flows of the flowchart and/or the block or blocks of the block diagram.

These computer program instructions can also be loaded on a computer or other programmable data processing device, such that a series of operational steps are performed on the computer or other programmable device to produce a computer-implemented process, such that instructions executed on the computer or other programmable device provide steps for implementing the functions specified in the flowchart or blocks and/or the block or blocks of the block diagrams.

The above is only an embodiment of the present application, and is not intended to limit the present application. Various modifications and variations of the present application are possible for those skilled in the art. Any modification, equivalent replacement, improvement, etc. made within the spirit and principle of the present application shall be included within the scope of the claims of the present application.

## Claims

1. A method for transmitting DetNet flow DT, the method being applied to a network device, and the method comprising:
distributing, by a woken-up distribution thread on the device, packets in a packet receiving queue bound to the distribution thread, so as to distribute packets belonging to DetNet flow in the packet receiving queue to a corresponding DetNet-flow Buffering Queue DBQ, and distribute packets belonging to best-effort flow to a corresponding Best-effort flow Queue BTQ; where the packets in the packet receiving queue refer to packets received through a local interface of the network device from outside;
putting, by a woken-up DetNet Forwarding Thread DFT on the device, packets in a DBQ bound to the DFT into a corresponding DetNet flow Queue DTQ;
putting, by a woken-up Cycle Forwarding Thread CFT on the device, packets in a DTQ bound to the CFT into a corresponding Cyclic Specific Queue CSQ, and selecting, by the CFT, a packet from a Sending Queue SQ and forwarding the packet through an out interface used for forwarding packets, where the SQ is a CSQ currently pointed by a Sending Queue Pointer SQP corresponding to the CFT.

2. The method according to claim 1, wherein distributing, by the distribution thread, packets in a packet receiving queue bound to the distribution thread comprises:
traversing packet receiving queues bound to the distribution thread, determining a currently traversed packet receiving queue as a current queue, and checking whether there is a packet in the current queue;
if there is a packet in the current queue, traversing the current queue, and determining a packet being traversed as a current packet; if the current packet belongs to DetNet flow, putting the current packet into a DBQ corresponding to the current queue; and if the current packet belongs to best-effort flow, putting the current packet into a BTQ corresponding to the current queue; after that, when there is still an untraversed packet, continuing to traverse an untraversed packet and returning to the step of determining a packet being traversed as a current packet;
if there is no packet in the current queue or there is no untraversed packet in the current queue, when there is still an untraversed packet receiving queue in all the packet receiving queues bound to the distribution thread, continuing to traverse packet receiving queues bound to the distribution thread that have not been traversed, and returning to the step of determining a currently traversed packet receiving queue as a current queue.

3. The method according to claim 2, wherein the distribution thread is set with a corresponding thread polling flag, and the thread polling flag has been set to FALSE when the distribution thread is woken up;
when detecting that there is a packet in the current queue, further setting the thread polling flag to TRUE to instruct to disable specified function that the distribution thread is set to; disabling the specified function is used to instruct to prevent the distribution thread from entering a sleep state;
after all the packet receiving queues bound to the distribution thread have been traversed, the method further comprises:
if the thread polling flag is TRUE, setting the thread polling flag to FALSE, and returning to the step of traversing the packet receiving queues bound to the distribution thread; if the thread polling flag is FALSE, instructing to enable the specified function, and enabling the specified function is used to instruct the distribution thread to wait for being woken up.

4. The method according to claim 2 or 3, wherein when the distribution thread distributes the packets belonging to the DetNet flow in the packet receiving queue to the corresponding DBQ, the method further comprises: if a DFT wake-up flag of the DFT bound to the DBQ is set to FALSE, setting the DFT wake-up flag to TRUE, and waking up the DFT with the DFT wake-up flag being TRUE; and/or,
after all the packet receiving queues bound to the distribution thread have been traversed, the method further comprises: for a DFT with a DFT wake-up flag being TRUE, wakening up the DFT, and setting the DFT wake-up flag of the DFT to FALSE.

5. The method according to claim 1, wherein putting, by a woken-up DetNet forwarding thread DFT on the device, packets in a DBQ bound to the DFT into a corresponding DetNet flow queue DTQ comprises:
traversing DBQs bound to the DFT, determining a DBQ being traversed as a current DBQ, and checking whether the current DBQ has a packet;
if there is a packet in the current DBQ, traversing the current DBQ, determining a packet being traversed as a current DBQ packet, and when invoking a preset packet duplication elimination and sorting PREOF function to identify that the current DBQ packet is not a duplicate packet, generating a packet output chain; performing packet encapsulation on each DBQ packet in the packet output chain, and putting the encapsulated DBQ packet into a DTQ corresponding to an out interface for forwarding the DBQ packet; after that, when there is still an untraversed packets in the DBQ, continuing to traverse an untraversed packets in the current DBQ and returning to the step of determining a packet being traversed as a current DBQ packet;
if there is no packet in the current DBQ or there is no untraversed packet in the current DBQ, when there is still an untraversed DBQ in all DBQs bound to the DFT, continuing to traverse untraversed DBQs and returning to the step of determining the currently traversed DBQ as a current DBQ.

6. The method according to claim 5, wherein the packet output chain is generated by the following steps:
when identifying that the current DBQ packet is not an out-of-order packet by invoking the PREOF function, putting the current DBQ packet into the packet output chain;
when identifying that the current DBQ packet is an out-of-order packet by invoking the PREOF function, determining a service flow to which the current DBQ packet belongs; if the current DBQ packet satisfies a condition, the condition referring to that the current DBQ packet has been successfully sequenced with at least one recorded packet which belongs to the service flow and has been processed by invoking the PREOF function within a preset time window, putting the current DBQ packet, at least one recorded packet which has been successfully sequenced with the current DBQ packet, recorded packets which belong to the service flow and have been processed by invoking the PREOF function outside the preset time window into the packet output chain; and if the current DBQ packet does not satisfy the condition, putting the recorded packets which belong to the service flow and have been processed by invoking the PREOF function outside the preset time window into the packet output chain.

7. The method according to claim 5, wherein the DFT is set with a corresponding DFT polling flag, and the DFT polling flag has been set to FALSE when the DFT is woken up;
when detecting that there is a packet in the current DBQ, the DFT polling flag is further set to TRUE, and the specified function that the DFT is set to is disabled, and disabling the specified function is used to instruct to prevent the DFT from entering a sleep state;
after all the DBQs bound to the DFT have been traversed, the method further comprises:
if the DFT polling flag is TRUE, setting the thread polling flag to FALSE, and returning to the step of traversing DFTs bound to the woken-up DBQ; if the DFT polling flag is FALSE, enabling the specified function, and enabling the specified function is used to instruct the DFT to wait for being woken up.

8. The method according to claim 5, wherein, after the DFT puts the DBQ packet into a DTQ corresponding to an out interface for forwarding the DBQ packet, the method further comprises: if a CFT wake-up flag set for the CFT bound to the DTQ is FALSE, setting the CFT wake-up flag to TRUE, and waking up the CFT with the CFT wake-up flag being TRUE;
after all the DBQs bound to the DFT have been traversed, the method further comprises: for a CFT with a CFT wake-up flag being TRUE, waking up the CFT, and setting the CFT wake-up flag of the CFT to FALSE.

9. The method according to claim 1, wherein putting, by a woken-up cycle forwarding thread CFT on the device, packets in a DTQ bound to the CFT into a corresponding cyclic specific queue CSQ comprises:
traversing DTQs bound to the CFT, determining a DTQ being traversed as a current DTQ, and checking whether there is a packet in the current DTQ,
if there is a packet in the current DTQ, traversing the current DTQ, determining a packet being traversed as a current DTQ packet, and determining a target CSQ corresponding to the current DTQ packet according to a cycle specified queue Cycle parameter carried by the current DTQ packet, if the target CSQ is between the SQ and an RQ, putting the current DTQ packet into the RQ, if the target CSQ is between a TQ and the SQ, putting the current DTQ packet into the TQ, if the target CSQ is between the RQ and the TQ, putting the current DTQ packet into the target CSQ; wherein the RQ is a CSQ currently pointed by a receiving queue pointer RQP corresponding to the CFT; the TQ is a CSQ currently pointed by a tolerating queue pointer TQP corresponding to the CFT; after that, when there is an untraversed packet in the current DTQ, traversing an untraversed packet, and returning to the step of determining a packet being traversed as a current DTQ packet;
if there is no packet in the current DTQ, or there is no untraversed packet in the current queue, when there is still an untraversed DTQ in all DTQs bound to the CFT, continuing to traverse an untraversed DTQ, and returning to determining a DTQ being traversed as a current DTQ.

10. The method according to claim 1 or 9, wherein putting, by a woken-up cycle forwarding thread CFT on the device, packets in a DTQ bound to the CFT into a corresponding cyclic specific queue CSQ is performed when the SQ is empty.

11. The method according to claim 9, wherein selecting, by the CFT, a packet from a sending queue SQ and forwarding the packet through an out interface used for forwarding packets, comprises:
when determining that a packet sending cycle has been updated, readjusting a cyclic specific queue pointer CSQP corresponding to the CFT, wherein the CSQP at least comprises a SQP; traversing packets in a SQ pointed by the adjusted SQP; determining a packet being traversed as a current SQ packet; and forwarding the current SQ packet by invoking an out interface for forwarding the current SQ packet; after that, when there is still an untraversed packet in the SQ, traversing an untraversed packet and returning to the step of determining a packet being traversed as a current SQ packet;
when determining that the packet sending cycle has not been updated, traversing packets in the SQ; determining a packet being traversed as a current SQ packet; and forwarding the current SQ packet by invoking an out interface for forwarding the current SQ packet; after that, when there is still an untraversed packet in the SQ, traversing an untraversed packet and returning to the step of determining a packet being traversed as a current SQ packet.

12. The method according to claim 11, wherein the CSQP further comprises a receiving queue pointer RQP and a tolerating queue pointer TQP; the RQP points to a CSQ which is a receiving queue RQ, and the TQP points to a CSQ which is a tolerating queue TQ;
wherein a sequence number of the CSQ pointed by the readjusted SQP is determined by a remainder from a modulo operation on a number d of CSQs bound to CFT according to a current processing cycle variable CFT_Jiffies set for the CFT;
a sequence number of the CSQ pointed by the readjusted RQP is determined according to a result by performing a modulo operation on the d according to a sum of the remainder and a specified jitter cycle number Jitter;
a sequence number of the CSQ pointed by the readjusted TQP is determined according to the following formula: (d-1+Rem-Jitter) mod d, where Rem is the remainder.

13. The method according to claim 9, wherein after the woken-up cycle forwarding thread CFT on the device has put all packets in all DTQs bound to the CFT into a corresponding cyclic specific queue CSQ, the method further comprises:
detecting an event under which a packet needs to be forwarded in time in the CSQ bound to the CFT; if so, returning to the step of selecting, by the CFT, a packet from a sending queue SQ and forwarding the packet through an out interface used for forwarding packets; and if not, waiting to be woken up again.

14. The method according to claim 11 or 13, wherein the event under which a packet needs to be forwarded in time is determined according to a current processing cycle variable CFT _Jiffies set for the CFT and a current packet receiving cycle variable CFT_Rcv_Jiffies, when a difference between a value of CFT _Jiffies and a value of CFT_Rcv_Jiffies is less than or equal to a specified difference, determining that there is an event under which the packet needs to be forwarded in time, otherwise, determining that there is no event under which the packet needs to be forwarded in time;
wherein when the CFT is woken up, or when detecting that there is an event under which a packet needs to be forwarded in time in the CSQ bound to the CFT, the value of the CFT _Jiffies is updated to a set current value of CSQF _Jiffies, where CSQF _Jiffies is used to indicate implementing specified cyclic queuing and forwarding cycle counting based on a segment routing;
when checking that there is a packet in the current DTQ, the value of CFT_Rcv_Jiffies is updated to the value of CFT _Jiffies.

15. The method according to claim 11, wherein whether the packet sending cycle is updated is determined by:
checking whether the value of the current processing cycle variable CFT _Jiffies set for the CFT is equal to the value of a historical cycle variable CFT _Prev _Jiffies, if so, determining that the packet sending cycle has not been updated, if not, determining that the packet sending cycle has been updated;
after readjusting the cyclic specific queue pointer CSQP corresponding to the CFT, the method further comprises: updating the value of the CFT_Prev_Jiffies to the current value of the CFT_Jiffies.

16. An electronic device, comprising: a processor and a machine-readable storage medium;
wherein the machine-readable storage medium stores machine-executable instructions executable by the processor;
the processor is adapted to execute machine-executable instructions to implement the steps of the method of any one of claims 1-15.
